# FASCICULE DE BREVET EUROPEEN

(11) **EP 0 833 091 B1**
(45) Date de publication et mention de la délivrance du brevet: **05.06.2002**
(21) Numéro de dépôt: 97402195.8
(22) Date de dépôt: 22.09.1997
(51) Int. Cl.: F16L 27/12, F01N 7/18

(54) **Découpleur apte à être interposé entre deux tubulures**
Entkupplungsvorrichtung, die zwischen zwei Rohrleitungsabschnitte eingesetzt werden kann
Decoupling device possible to be inserted between two pipe unions

(30) Priorité: 25.09.1996 FR 9611655
(43) Date de publication de la demande: 01.04.1998
(73) Titulaire: Hydrometal, 28320 Gallardon (FR)
(72) Inventeur: Laville, Christian, 91150 Etampes (FR)
(74) Mandataire: Flavenot, Bernard

(56) Documents cités:
- EP-A- 0 511 000
- EP-A- 0 657 683
- DE-A- 3 526 481
- DE-C- 4 417 407
- US-A- 4 350 372
- US-A- 5 370 427
- PATENT ABSTRACTS OF JAPAN vol. 008, no. 274 (M-345), 14 décembre 1984 & JP 59 145321 A (TOYOTA JIDOSHA KK), 20 août 1984,

## Description

La présente invention concerne les découpleurs, c'est-à-dire les dispositifs qui permettent de relier deux tubulures de façon étanche même lorsqu'au moins l'une des deux tubulures est apte à subir, dans certaines limites, des déplacements par rapport à l'autre, quelles que soient la forme et la fonction des tubulures et quel que soit le type de leurs déplacements relatifs, translation, rotation, torsion combinaison de ces mouvements, etc.

On connaît déjà, par exemple dans le document EP-A-0 657 683, des découpleurs qui permettent de relier deux tubulures constituées par exemple par la sortie d'échappement d'un bloc moteur ou un collecteur d'échappement et l'entrée d'une ligne d'échappement plus connue sous l'appellation "pot d'échappement". Dans ce cas d'application, les deux tubulures peuvent subir des débattements de toutes sortes l'une par rapport à l'autre, qui peuvent être des mouvements tels que des translations, des rotations, des torsions ou des combinaisons de ces mouvements, ou des vibrations.

Pour relier de telles tubulures, on a réalisé des découpleurs qui sont essentiellement constitués par des soufflets étanches qui permettent, du fait qu'ils peuvent se déplacer dans les trois directions de l'espace, d'absorber tous ces mouvements.

Cependant, ce type de découpleur a une durée de vie relativement courte car le soufflet n'est pas protégé des agents extérieurs et parce qu'il peut être amené à subir des déformations au-delà de ses limites permises.

Pour pallier ces inconvénients, on a alors réalisé des découpleurs qui comportent en outre des moyens qui permettent, d'une part de protéger le soufflet et d'autre part de limiter l'amplitude de sa déformation.

Cependant, les moyens de protection du soufflet et de limitation de l'amplitude de sa déformation qui ont été réalisés jusqu'à ce jour ne donnent pas entière satisfaction. Notamment, ils peuvent contrarier les effets recherchés pour le soufflet avant même qu'il n'ait atteint sa limite de déformation permise.

La présente invention a donc pour but de réaliser un découpleur qui pallie les inconvénients mentionnés ci-dessus, ayant une structure relativement simple et facile à réaliser qui lui confère une certaine souplesse pour suivre les mouvements de service, tout en lui permettant de durcir jusqu'à une limite déterminée lorsqu'il est soumis à des conditions exceptionnelles.

Plus précisément, la présente invention a pour objet un découpleur apte à être interposé entre deux tubulures, comportant :
des première et seconde embases annulaires aptes à être respectivement reliées aux deux tubulures,
un soufflet,
des moyens pour solidariser les deux extrémités dudit soufflet avec respectivement les première et seconde embases annulaires de façon que les deux embases et le soufflet soient sensiblement centrés sur un même axe de centrage,
caractérisé par le fait qu'il comporte en outre:
des premier et second moyens de ressort respectivement associés aux deux embases de façon que, lorsque les deux embases subissent un déplacement l'une par rapport à l'autre, l'un des premier et second moyens de ressort agit en compression tandis que l'autre agit en extension.

D'autres caractéristiques et avantages de la présente invention apparaîtront au cours de la description suivante donnée en regard des dessins annexés à titre illustratif, mais nullement limitatif, dans lesquels:
Les figures 1 à 3 représentent une vue en demi-coupe schématique, respectivement de trois modes de réalisation d'un découpleur selon l'invention.
Les figures 4 et 5 représentent, respectivement en vue en bout et de côté, un même mode de réalisation d'un découpleur selon l'invention qui est basé sur la réalisation représentée schématiquement en demi-coupe sur la figure 1, la figure 4 ne représentant qu'une demi-partie du découpleur par souci de simplification du dessin.

Les cinq figures représentent différents modes de réalisation du découpleur selon l'invention. Cependant, dans le but de simplifier la présente description, les mêmes références y désignent les mêmes éléments quelle que soit la figure sur laquelle elles apparaissent.

Il est bien précisé que, lorsque, selon la définition de l'invention, l'objet de l'invention comporte "au moins un" élément ayant une fonction donnée, le mode de réalisation décrit peut comporter plusieurs de ces éléments.

Les cinq figures représentent trois modes de réalisation d'un découpleur 1 qui est apte à être interposé entre deux tubulures 2, 3 qui peuvent être de tout type et avoir toute fonction, par exemple la sortie d'échappement d'un bloc moteur et l'entrée du pot d'échappement dans un véhicule du type automobile ou analogue.

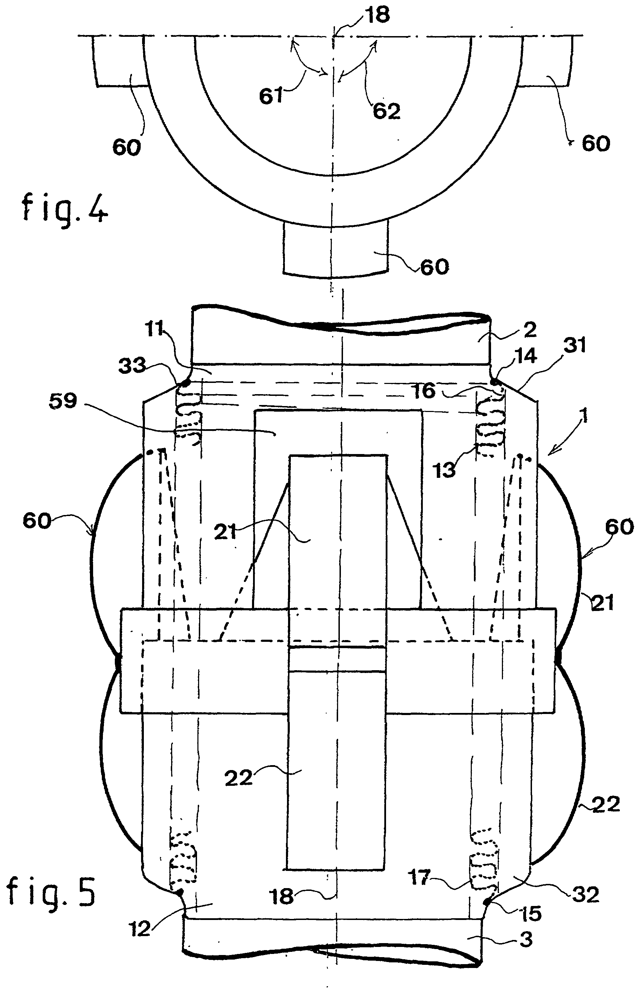

D'une façon générale, un tel découpleur comporte des première 11 et seconde 12 embases annulaires avantageusement circulaires ou cylindriques de révolution qui sont aptes à être respectivement reliées de façon étanche aux deux tubulures 2, 3 schématiquement illustrées sur la figure 5. Un soufflet 13 généralement étanche est prévu et associé à des moyens 14, 15 qui permettent de solidariser ses deux extrémités 16, 17 avec respectivement les première et seconde embases annulaires 11, 12 de façon que ces deux embases et le soufflet soient sensiblement centrés sur un même axe de centrage 18.

Ces moyens de solidarisation 14, 15 peuvent être de tout type, par exemple un sertissage ou un cordon de soudure qui assure à la fois la solidarisation des extrémités 16, 17 du soufflet 13 avec respectivement les deux embases et l'étanchéité de la conduite formée par l'ensemble des éléments suivants: les deux embases 11, 12, le soufflet 13 et les deux tubulures 2, 3, tous ces éléments étant montés en série comme cela se comprend sur la figure 5.

Le découpleur comporte en outre, dans les buts définis ci-avant dans le préambule de la présente description, des premier 21 et second 22 moyens de ressort respectivement associés aux deux embases de façon que, lorsque les deux embases 11, 12 subissent un déplacement l'une par rapport à l'autre, par exemple une translation et/ou une rotation et/ou une torsion, l'un des premier et second moyens de ressort 21, 22 agit en compression tandis que l'autre agit en extension, et réciproquement bien entendu, tout en générant des efforts différents qui, combinés, donnent une force résultante déterminée.

De cette façon, les efforts respectivement exercés par les deux moyens de ressort 21, 22 sur les deux embases sont maîtrisables et ajustables et permettent d'appliquer sur ces deux embases une force résultante quel que soit leur déplacement relatif. L'action du soufflet 13 ne s'en trouve ainsi pas substantiellement modifiée, ce qui permet de concevoir un soufflet d'une structure parfaitement adaptée aux spécifications demandées pour le découpleur selon les conditions imposées par son utilisation.

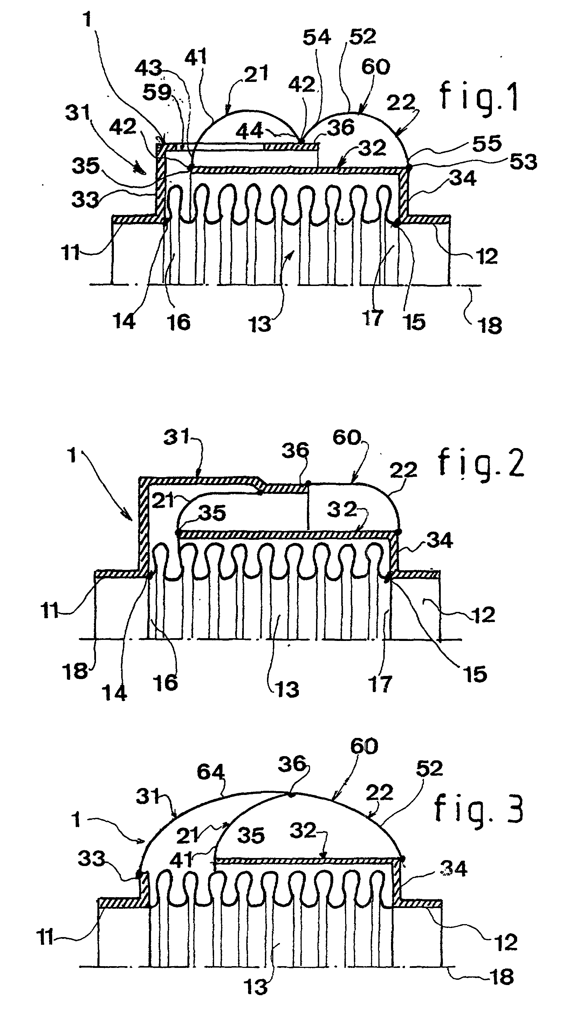

Les figures 1 à 5 représentent différents exemples de réalisation de ces premier et second moyens de ressort 21, 22.

Ils comportent essentiellement deux première 31 et seconde 32 cages entourant chacune au moins partiellement le soufflet 13, une extrémité 33, 34 de chacune des deux cages étant solidarisée, par tous moyens, soudage, sertissage, etc., respectivement avec les première et seconde embases 11, 12.

Ces cages sont en outre associées de façon qu'elles plongent au moins partiellement l'une dans l'autre, comme représenté sur toutes les figures. Dans les modes de réalisation illustrés, une partie d'une cage, en l'occurrence la cage 31, recouvre l'autre cage, en l'occurrence la cage 32, en l'entourant partiellement. Les explications données dans la présente description et l'observation des figures 1 à 5 permettront à l'homme du métier de définir les dimensions de ces deux cages.

Les moyens de ressort 21, 22 comportent en outre au moins un premier ressort 41 et des moyens 42 pour solidariser ses deux extrémités 43, 44 avec respectivement sensiblement les deux extrémités libres 35, 36 des deux cages 31, 32, et au moins un second ressort 52 auquel sont associés des moyens 53 pour relier ses deux extrémités 54, 55 avec respectivement les deux embases 11, 12.

Les moyens 42 et 53 peuvent être constitués de différentes façons, par exemple par un sertissage, un cordon de soudure ou analogue, etc.

Les cages 31, 32 sont de plus réalisées de façon qu'elles soient indéformables, en tout cas d'une rigidité très supérieure à celle des deux ressorts 41, 52 pour que ces derniers puissent réaliser les fonctions définies ci-avant et donner le résultat souhaité qui sera explicité ci-après.

Dans une réalisation particulièrement avantageuse, ces premier et second ressorts 41, 52 sont constitués par un couple 60 de première et deuxième lames élastiques affectant chacune sensiblement la forme d'un "C", les deux lames étant sensiblement situées dans un même plan qui, en outre, contient l'axe de centrage 18.

Cette structure en lames pour les premier et second ressorts 41, 52 est avantageuse car elle permet d'ajuster la souplesse du découpleur, notamment en adaptant l'épaisseur et la forme de ces lames. De plus, les composantes des efforts de compensation entre les deux embases comme explicité ci-avant sont alors parfaitement adaptées, aussi bien pour le cas où les embases sont amenées à subir des translations et des rotations autour d'un axe perpendiculaire à l'axe de centrage 18, que lorsqu'elles sont soumises à des torsions et/ou des rotations autour de cet axe de centrage 18.

Dans le mode de réalisation décrit ci-dessus, le découpleur comporte un seul couple 60 de lames élastiques. Mais il est bien évident qu'il pourra comporter une pluralité de ces couples de lames 60 régulièrement répartis autour de l'axe de centrage 18.

Dans ce cas, les angles au sommet 61, 62 des dièdres formés par deux plans successifs contenant chacun un couple de lames sont de préférence égaux, comme plus particulièrement représenté sur les figures 4 et 5 qui illustre une réalisation comportant quatre de ces couples.

Les moyens 53 pour relier les deux extrémités 54, 55 du second ressort 52 avec respectivement les deux embases 11, 12 n'ont été définis ci-avant que par leur fonction première.

C'est ainsi que les extrémités du second ressort 52 peuvent être directement reliées aux deux embases. Mais, comme illustré sur les figures, pour que ce second ressort 52 soit de forme sensiblement identique à celle du premier ressort 41, l'extrémité 54 du ressort 52 est reliée à l'embase 11 par l'intermédiaire de la cage 31.

En se référant aux réalisations illustrées dans le cas où, comme mentionné ci-dessus, le ressort 52 est relié aux deux embases 11, 12 par une cage, il est apparent que l'extrémité 55 du ressort 52 est sensiblement reliée directement à l'embase 12 qui supporte la cage 32 qui plonge dans la cage 31, tandis que son autre extrémité 54 est solidarisée sensiblement à l'extrémité libre 36 de la cage 31 qui entoure par l'extérieur l'autre cage 32. Comme la cage 31 est indéformable, il est équivalent que l'extrémité 54 du ressort 52 soit solidarisée directement à l'embase 11 ou par l'intermédiaire de cette cage 31.

Dans le mode de réalisation illustré sur les figures 1 et 5, le ressort 41 passe à travers une fenêtre 59 réalisée dans la cage 31 tandis que, dans le mode de réalisation selon la figure 2, le ressort 41 est entièrement situé dans l'espace compris entre les deux parties de cages qui se recouvrent. La réalisation selon les figures 1 et 5 permet, si nécessaire, de donner aux deux lames une courbure plus importante que dans le cas de la réalisation selon la figure 2.

Pour simplifier la structure du découpleur dans certaines de ses applications, il est même possible que la cage 31 soit constituée, comme illustré sur la figure 3, par un organe de ressort 64 comme une lame élastique qui présente une rigidité très supérieure à celle du premier ressort 41 pour que le ressort 41 se déforme en priorité par rapport à l'organe de ressort 64. Dans ce cas, l'organe de ressort 64 et le second ressort 52 peuvent être réalisés dans une seule lame, le premier ressort 41 venant se solidariser sensiblement dans la partie médiane de cette lame unique. Il est alors aussi préférable que la lame élastique constituant l'organe de ressort 64 soit située dans le plan défini par les première et deuxième lames élastiques d'un couple 60.

Les lames élastiques peuvent être réalisées dans tout matériau qui présente une certaine résilience. Elles seront cependant avantageusement réalisées dans de l'acier inoxydable du type austénitique.

En résumé, le découpleur apte à être interposé entre deux tubulures selon les revendications.

## Revendications

1. Découpleur (1) apte à être interposé entre deux tubulures (2, 3), comportant :
des première (11) et seconde (12) embases annulaires aptes à être respectivement reliées aux deux tubulures (2, 3),
un soufflet (13),
des moyens (14, 15) pour solidariser les deux extrémités (16, 17) dudit soufflet (13) avec respectivement les première et seconde embases annulaires (11, 12) de façon que les deux embases et le soufflet soient sensiblement centrés sur un même axe de centrage (18),
**caractérisé par le fait qu'**il comporte :
des premier (21) et second (22) moyens de ressort respectivement associés aux deux embases de façon que, lorsque les deux embases (11, 12) subissent un déplacement l'une par rapport à l'autre, l'un des premier et second moyens de ressort agit en compression tandis que l'autre agit en extension.

2. Découpleur selon la revendication 1, **caractérisé par le fait que** les premier et second moyens de ressort (21, 22) comportent:
deux première (31) et seconde (32) cages entourant le soufflet (13), une extrémité (33, 34) de chacune des deux cages étant solidaire respectivement des première et seconde embases (11, 12), lesdites cages plongeant au moins partiellement l'une dans l'autre,
au moins un premier ressort (41),
des moyens (42) pour solidariser les deux extrémités (43, 44) dudit premier ressort (41) avec respectivement sensiblement les deux extrémités libres (35, 36) des deux cages (31, 32),
au moins un second ressort (52), et
des moyens (53) pour relier les deux extrémités (54, 55) dudit second ressort (52) avec respectivement les deux dites embases (11, 12).

3. Découpleur selon la revendication 2, **caractérisé par le fait que** les deux premier et second ressorts (41, 52) sont constitués par un couple (60) de première et deuxième lames élastiques affectant chacune sensiblement la forme d'un "C".

4. Découpleur selon la revendication 3, **caractérisé par le fait que** les deux première et deuxième lames élastiques dudit couple (60) sont sensiblement situées dans un même plan, ledit plan contenant ledit axe de centrage (18).

5. Découpleur selon la revendication 3, **caractérisé par le fait qu'**il comporte une pluralité de couples (60) de première et deuxième lames élastiques régulièrement répartis autour dudit axe de centrage.

6. Découpleur selon la revendication 5, **caractérisé par le fait que** les deux lames élastiques de chaque couple (60) sont sensiblement situées dans un même plan, tous les plans contenant ledit axe de centrage (18).

7. Découpleur selon la revendication 6, **caractérisé par le fait que** les angles au sommet (61, 62) des dièdres formés par deux plans successifs contenant chacun les deux lames d'un même couple sont égaux.

8. Découpleur selon l'une des revendications 2 à 7, **caractérisé par le fait que** les moyens (53) pour relier l'une (54) des deux extrémités du second ressort (52) à l'une (11) des deux embases comportent l'une (31) des deux cages.

9. Découpleur selon la revendication 2, **caractérisé par le fait que** l'une (31) des deux cages (31, 32) est constituée par un organe de ressort (64).

10. Découpleur selon les revendications 4 et 9, **caractérisé par le fait que** le troisième moyen de ressort (64) est constitué par une troisième lame élastique située dans le plan défini par le couple (60) des première et deuxième lames élastiques (figure 3).

## Patentansprüche

1. Entkoppler (1), der zwischen zwei Rohrstutzen (2, 3) eingesetzt werden kann und umfaßt:
erste (11) und zweite (12) ringförmige Ansätze, die jeweils mit den beiden Rohrstutzen (2, 3) verbunden werden können,
einen Balg (13),
Mittel (14, 15), die die beiden Enden (16, 17) des Balgs (13) mit dem ersten bzw. dem zweiten ringförmigen Ansatz (11, 12) in der Weise verbinden, daß die beiden Ansätze und der Balg im wesentlichen auf dieselbe Zentrierachse (18) zentriert sind,
**dadurch gekennzeichnet, daß** er umfaßt:
erste (21) und zweite (22) Federmittel, die jeweils den beiden Ansätzen in der Weise zugeordnet sind, daß, wenn die beiden Ansätze (11, 12) einer gegenseitigen Verlagerung unterworfen werden, eines der ersten und zweiten Federmittel in Kompressionsrichtung wirkt, während das andere in Ausdehnungsrichtung wirkt.

2. Entkoppler nach Anspruch 1, **dadurch gekennzeichnet, daß** die ersten und zweiten Federmittel (21, 22) umfassen:
zwei erste (31) und zweite (32) Käfige, die den Balg (13) umgeben, wobei ein Ende (33, 34) jedes der beiden Käfige mit dem ersten bzw. dem zweiten Ansatz (11, 12) verbunden ist, wobei die Käfige wenigstens teilweise ineinander geschoben sind,
wenigstens eine zweite Feder (52) und
Mittel (53) zum Verbinden der beiden Enden (54, 55) der zweiten Feder (52) mit einer entsprechenden der beiden Ansätze (11, 12).

3. Entkoppler nach Anspruch 2, **dadurch gekennzeichnet, daß** die zwei ersten und zweiten Federn (41, 52) durch ein Paar (60) erster und zweiter elastischer Lamellen gebildet sind, die jeweils im wesentlichen die Form eines "C" annehmen.

4. Entkoppler nach Anspruch 3, **dadurch gekennzeichnet, daß** sich die zwei ersten und zweiten elastischen Lamellen des Paars (60) im wesentlichen in derselben Ebene befinden, wobei diese Ebene die Zentrierachse (18) enthält.

5. Entkoppler nach Anspruch 3, **dadurch gekennzeichnet, daß** er mehrere Paare (60) erster und zweiter elastischer Lamellen umfaßt, die um die Zentrierachse regelmäßig verteilt sind.

6. Entkoppler nach Anspruch 5, **dadurch gekennzeichnet, daß** die zwei elastischen Lamellen jedes Paars (60) im wesentlichen in derselben Ebene liegen, wobei alle Ebenen die Zentrierachse (18) enthalten.

7. Entkoppler nach Anspruch 6, **dadurch gekennzeichnet, daß** die Winkel am Scheitel (61, 62) der Zweiflächner, die durch zwei aufeinanderfolgende Ebenen gebildet werden, welche jeweils die beiden Lamellen desselben Paars enthalten, gleich sind.

8. Entkoppler nach einem der Ansprüche 2 bis 7, **dadurch gekennzeichnet, daß** die Mittel (53) zum Verbinden eines (54) der zwei Enden der zweiten Feder (52) mit einer (11) der beiden Ansätze einen (31) der zwei Käfige enthalten.

9. Entkoppler nach Anspruch 2, **dadurch gekennzeichnet, daß** einer (31) der zwei Käfige (31, 32) durch ein Federorgan (64) gebildet ist.

10. Entkoppler nach den Ansprüchen 4 und 9, **dadurch gekennzeichnet, daß** das dritte Federmittel (64) durch eine dritte elastische Lamelle gebildet ist, die sich in der Ebene befindet, die durch das Paar (60) der ersten und zweiten elastischen Lamellen definiert ist (Fig. 3).

## Claims

1. A decoupler (1) suitable for being interposed between two tubes (2, 3), the decoupler comprising:
first and second annular sockets (11, 12) suitable for being connected respectively to the two tubes (2, 3);
a bellows (13);
means (14, 15) for interconnecting the two ends (16, 17) of said bellows (13) respectively with the first and second annular sockets (11, 12) so that the two sockets and the bellows are substantially centered on a common centering axis (18);
the decoupler being **characterized by** the fact that it further comprises:
first and second spring means (21, 22) respectively associated with the two sockets in such a manner that when the two sockets (11, 12) are subjected to displacement relative to each other, one of the first and second spring means acts in compression while the other acts in extension.

2. A decoupler according to claim 1, **characterized by** the fact that the first and second spring means (21, 22) comprise:
first and second cages (31, 32) surrounding the bellows (13), one end (33, 34) of each of the two cages being secured to a respective one of the first and second sockets (11, 12), one of said cages being engaged at least in part with the other;
at least a first spring (41);
means (42) for connecting the two ends (43, 44) of said first spring (41) respectively with substantially the two free ends (35, 36) of the two cages (31, 32);
at least a second spring (52); and
means (53) for connecting the two ends (54, 55) of said second spring (52) respectively with said two sockets (11, 12).

3. A decoupler according to claim 2, **characterized by** the fact that the first and second springs (41, 52) are constituted by a pair (60) of first and second resilient blades each being substantially C-shaped.

4. A decoupler according to claim 3, **characterized by** the fact that the first and second resilient blades of said pair (60) are situated substantially in the same plane, said plane containing said centering axis (18).

5. A decoupler according to claim 3, **characterized by** the fact that it has a plurality of pairs (60) of first and second resilient blades regularly distributed around said centering axis.

6. A decoupler according to claim 5, **characterized by** the fact that the two resilient blades of each pair (60) are situated substantially in the same plane, and all of the planes contain said centering axis (18).

7. A decoupler according to claim 6, **characterized by** the fact that the dihedral angles (61, 62) formed between two successive planes each containing two blades in the same couple are equal.

8. A decoupler according to any one of claims 2 to 7, **characterized by** the fact that the means (53) for connecting one of the two ends (54) of the second spring (52) to one of the two sockets (11) comprise one of the two cages (31).

9. A decoupler according to claim 2, **characterized by** the fact that one of the two cages (31) is constituted by a spring member (64).

10. A decoupler according to claims 4 and 9, **characterized by** the fact that the third spring means (64) is constituted by a third resilient blade situated in the plane defined by the pair (60) of first and second resilient blades (Figure 3).
